# FASCICULE DE BREVET EUROPEEN

(11) **EP 1 583 596 B1**
(45) Date de publication et mention de la délivrance du brevet: **30.04.2008**
(21) Numéro de dépôt: 04702729.7
(22) Date de dépôt: 16.01.2004
(51) Int. Cl.: B01D 3/32, C10M 175/00, B01D 3/14

(54) **INSTALLATION TRANSPORTABLE DE RETRAITEMENT DE RESIDUS HYDROCARBURES**
TRANSPORTABLE VORRICHTUNG ZUR WIEDERAUFARBEITUNG VON KOHLENWASSERSTOFFRÜCKSTÄNDEN
MOBILE DEVICE FOR REPROCESSING HYDROCARBON WASTES

(30) Priorité: 17.01.2003 FR 0300481
(43) Date de publication de la demande: 12.10.2005
(73) Titulaire: Leroux et Lotz Technologies, 44100 Nantes (FR)
(72) Inventeur: PETIT, Gérard, F-44300 Nantes (FR)
(74) Mandataire: Laget, Jean-Loup
(86) Numéro de dépôt international: PCT/FR2004/000083
(87) Numéro de publication internationale: WO 2004/067137

(56) Documents cités:
- US-A- 3 953 298
- US-A- 5 316 743
- DATABASE COMPENDEX [Online] ENGINEERING INFORMATION, INC., NEW YORK, NY, US; septembre 1988 (1988-09), ANONYMOUS: "Superfund site cleaned by solvent extraction process" XP002263022 Database accession no. EIX89010235078 cité dans la demande & PUBLIC WORKS SEP 1988, vol. 119, no. 10, septembre 1988 (1988-09), page 109,

## Description

La présente invention concerne une installation transportable de retraitement de résidus hydrocarburés, en particulier de mélanges eau/hydrocarbures, issus notamment de l'exploitation des navires en vue de la récupération de produits valorisables, tels que du fuel N°2 à basse viscosité et du naphta.

Les navires produisent quotidiennement des déchets liquides encore appelés eaux mazouteuses. Une nouvelle réglementation a imposé une traçabilité de ces déchets. De ce fait, aujourd'hui, les eaux mazouteuses sont collectées pour être retraitées. Ce retraitement consiste à séparer l'eau des hydrocarbures généralement par décantation puis à soumettre le résultat de la décantation à une centrifugation ou à une évaporation. Les hydrocarbures récupérés, mélange de fuel, d'huile et d'essence de provenance variée sont alors soit détruits par incinération lorsqu'ils présentent des spécificités dangereuses, soit revendus à très bas prix lorsque le lot est relativement homogène en tant que combustible bas de gamme dans certaines industries présentant des besoins calorifiques élevés tels que les cimenteries. On est donc aujourd'hui à la recherche d'unité d'installation de retraitement dont les conceptions permettent l'obtention de produits valorisables quelles que soient les provenances et les spécifications des résidus hydrocarburés retraités, ces installations devant être aisément transportables et opérationnelles. Les installations connues aujourd'hui peuvent, pour certaines, être transportables. De telles installations sont notamment décrites dans les brevets US-A-5.316.743 et US-A-3.953.298 ainsi que dans l'article "Superfund site cleaned by solvent extraction process" de la base de données en ligne Compendex accession no. EIX89010235078 XP002263022. Toutefois, aucune de ces installations n'est opérationnelle de manière aisée et rapide de telle sorte que l'avantage d'une installation transportable disparaît.

Un but de la présente invention est donc de proposer une installation de retraitement de résidus dont la conception permet de retraiter tout type de résidus hydrocarburés en vue de l'obtention de produits valorisables quels que soient la provenance et les spécifications des résidus hydrocarburés d'origine à retraiter.

Un autre but de la présente invention est de proposer une installation de retraitement de résidus aisément transportable, opérationnelle en quelques jours et dont la conception limite les risques d'accident et de pollution.

Un autre but de la présente invention est de proposer une installation de retraitement de résidus hydrocarburés dont la conception autorise une mise en fonctionnement rapide, à savoir en moins d'une heure, de manière à offrir une grande souplesse de production suivant l'approvisionnement en résidus hydrocarburés, cette installation étant apte à être rendue opérationnelle sur un site en quelques jours.

A cet effet, l'invention a pour objet une installation transportable de retraitement de résidus hydrocarburés, en particulier de mélange eau/hydrocarbures, issus notamment de l'exploitation des navires et préalablement soumis à une décantation, en vue de la récupération de produits valorisables, tels que du fuel N°2 à basse viscosité et du naphta, caractérisée en ce que l'installation comporte au moins une colonne de distillation du mélange dont le fût est articulé à la base de la colonne pour passer d'une position couchée de transport de la colonne à une position dressée de travail dans laquelle le fût repose sur sa base.

Grâce au choix du mode de retraitement de résidus hydrocarburés, à savoir au moyen d'un processus de distillation effectué à basse température d'environ 140°C et à pression atmosphérique et à la conception de ladite colonne de distillation se présentant sous forme d'un ensemble containérisable, il devient aisé de transporter une telle installation tout en facilitant sa mise en place sur site.

L'invention sera bien comprise à la lecture de la description suivante d'exemples de réalisation, en référence aux dessins annexés dans lesquels :
la figure 1 représente une vue schématique de dessus d'une installation conforme à l'invention ;
la figure 2 représente une vue de face d'une colonne de distillation lors de son passage d'une position couchée à une position dressée ou inversement ;

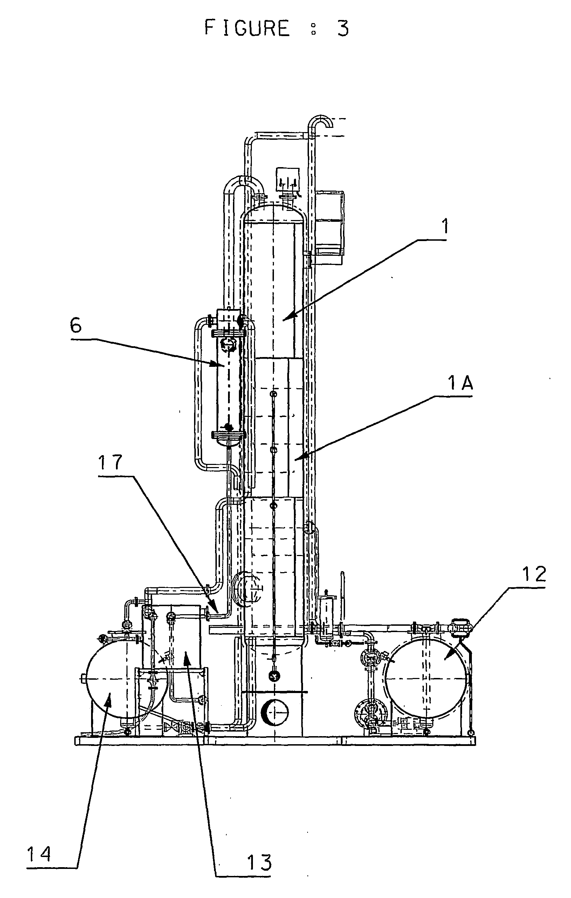

la figure 3 représente une vue schématique de côté de l'installation représentée à la figure 1 et

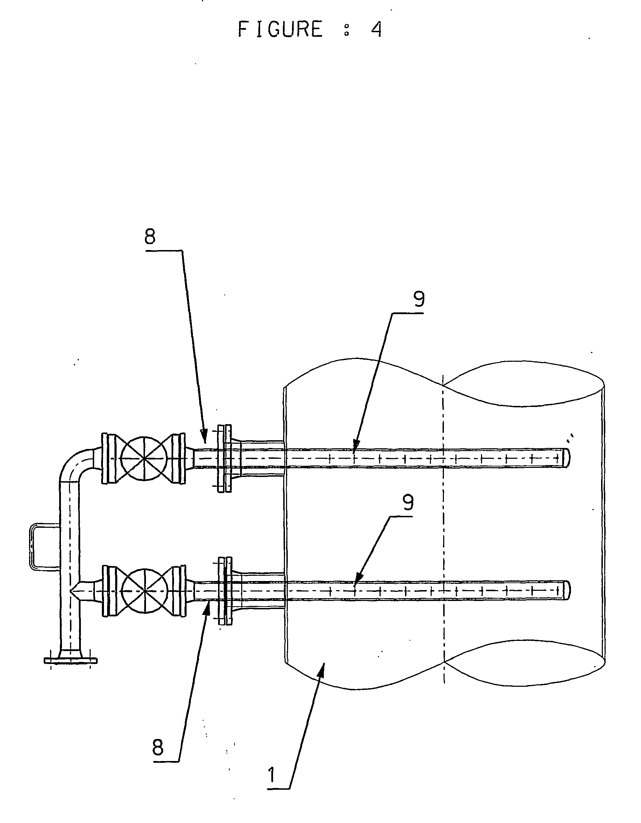

la figure 4 représente une vue schématique du détail des cannes d'injection des résidus hydrocarburés dans la colonne de distillation.

Comme mentionné ci-dessus, l'installation, objet de l'invention, a pour fonction de permettre le retraitement de résidus hydrocarburés, en particulier de mélange eau/hydrocarbures, issus notamment de l'exploitation des navires. Cette installation est également utilisable pour traiter du pétrole brut, pour augmenter son point éclair et le rendre utilisable pour des machines thermiques. Généralement, les mélanges d'eau/hydrocarbures, encore appelés eaux mazouteuses ou "slops", sont, au moment de leur collecte, stockés dans des bacs de stockage où ils subissent une décantation naturelle. L'installation, objet de l'invention, est donc destinée à être positionnée au voisinage de ces bacs de stockage. Cette installation a pour objet d'assurer un retraitement des résidus par distillation dite atmosphérique. La distillation est opérée à basse température environ 140°C et pression atmosphérique afin de minimiser les risques d'accident et de pollution. Le principe de distillation utilisé est un principe connu, la distillation étant une distillation s'opérant au moyen de plateaux.

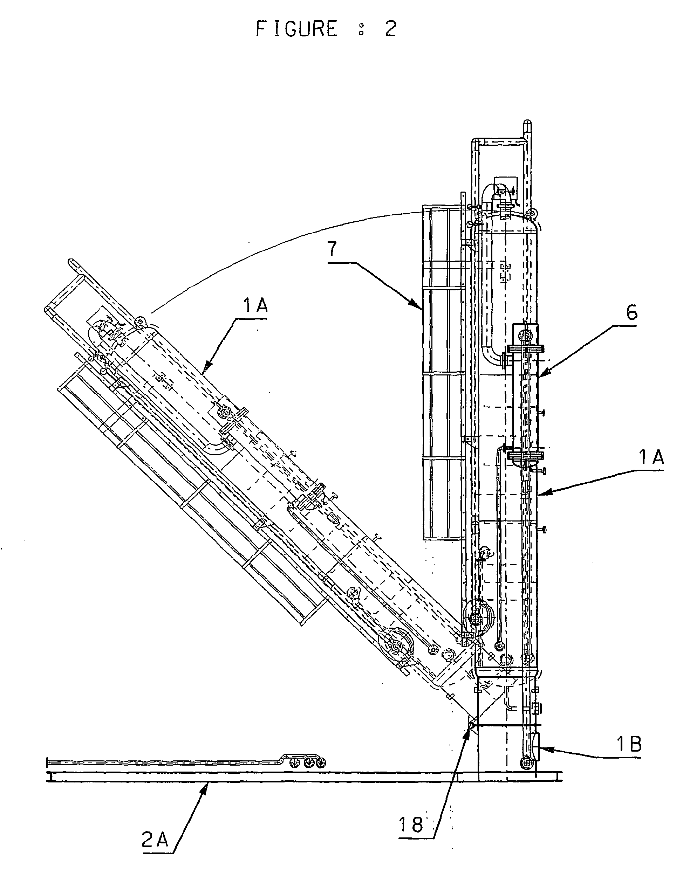

Afin d'obtenir une installation aisément transportable et apte à être rendue opérationnelle en un temps très court au moyen d'un seul engin de levage tel qu'une grue, la colonne 1 de distillation de l'installation comporte un fut 1A articulé à la base 1B de la colonne 1 pour passer d'une position couchée de transport de la colonne 1 à une position dressée de travail dans laquelle le fût 1A repose sur sa base 1B. Ce déplacement du fût 1A est plus particulièrement représenté à la figure 2. Ce déplacement peut être opéré au moyen d'une seule grue alors que deux grues seraient nécessaires dans le cas d'une colonne non articulée. Le fût 1A de la colonne est donc articulé de manière permanente à la base 1B de la colonne. L'articulation est constituée ici d'une articulation de type charnière représentée en 18 à la figure 2. Une fois le fût 1A de la colonne en position dressée, le fût est maintenu assemblé à la base 1B de la colonne généralement par boulonnage entre elles de deux collerettes équipant respectivement le fût 1A et la base 1B. L'ensemble peut ainsi résister à des conditions atmosphériques défavorables. La longueur du fût 1A est choisie de manière à permettre une containérisation de la colonne 1 de distillation. Ainsi, la base 1B de la colonne 1 est solidarisée à une plate-forme 2A servant de surface de réception du fût 1A de la colonne 1 en position couchée de cette dernière de manière à former un module 2, dit de retraitement du mélange, containérisable. Le conteneur présente généralement une longueur de l'ordre de 11,90 mètres tandis que la hauteur du conteneur est de l'ordre de 2,30 mètres. La colonne 1 est équipée, le long de l'une de ses génératrices, d'un condenseur 6 solidaire en déplacement du fût 1A de la colonne 1. De même, cette colonne 1 est équipée, le long de l'une de ses génératrices, de moyens 7 d'accès au sommet de la colonne, ces moyens d'accès étant solidaires en déplacement du fût 1A de la colonne 1. Dans l'exemple représenté, ces moyens d'accès sont constitués par une cage incorporant une échelle à crinoline. Ainsi, le fût 1A de la colonne, le condenseur 6 ainsi que les moyens 7 d'accès sont, lors du passage du fût 1A d'une position dressée à une position couchée, déplacés simultanément pour venir se positionner en appui sur la plate-forme 2A supportant ladite colonne. L'ensemble est alors prêt à être introduit dans un conteneur. A l'inverse, après sortie d'un conteneur, il suffit, au moyen d'une grue d'amener le fût 1A de la colonne de la position couchée à la position dressée pour rendre opérationnelle la colonne 1 de distillation.

Pour faciliter la mise en place d'une telle installation, cette installation se présente sous forme d'un ensemble de modules 2, 3, 4, 5 containérisables, en particulier en conteneurs de dimension standard, chaque module étant constitué d'une plate-forme 2A, 3A, 4A, 5A apte à supporter les éléments de fonction dudit module 2, 3, 4, 5. Ainsi, outre le module 2 de distillation ou de retraitement décrit ci-dessus, l'installation peut comporter encore un module 3 dit de préparation du mélange, un module 5 dit d'utilités et un module 4 dit de traitement du distillat qui seront décrits plus en détail ci-après.

Pour permettre le traitement de tels résidus hydrocarburés, en particulier par distillation, il est nécessaire d'alimenter en résidus la colonne 1 de distillation. Toutefois, pour faciliter cette distillation, ces résidus doivent être préparés, en particulier chauffés. A cet effet, l'entrée de la colonne 1 de distillation est raccordable d'une part à un échangeur 10 de chaleur apte à réchauffer les résidus destinés à alimenter la colonne 1, d'autre part à un appareil 11 de production de vapeur d'eau apte à faciliter la distillation. En effet, la vapeur d'eau produite tend à entraîner la vapeur issue de la distillation des résidus vers le haut de la colonne de distillation. Par ailleurs, cet appareil 11 de production de vapeur peut être utilisé pour le dégazage de la colonne. Le réchauffage des résidus au moyen d'un tel échangeur 10 de chaleur est obtenu notamment à partir de la circulation d'un fluide thermique, tel que de l'huile, au voisinage de l'échangeur 10 de chaleur. A cet effet, l'installation comporte, disposés sur un autre module 5, des moyens 16 de chauffage d'un fluide, en particulier de l'huile. Ces moyens de chauffage 16 peuvent être constitués par une chaudière équipée d'un brûleur alimenté en fuel, le fuel pouvant être issu des produits valorisables obtenus après distillation. Le fluide chauffé circule depuis son lieu de chauffage vers l'échangeur 10 de chaleur par l'intermédiaire de canalisations s'étendant entre lesdits modules. Ainsi, la conduite 19A représente la conduite aller du fluide chauffé tandis que la conduite 19B représente la conduite retour du fluide chauffé vers ses moyens 16 de chauffage. Les résidus, une fois réchauffés et portés à une température voisine de 140°C sont envoyés sous pression à l'intérieur de la colonne 1 de distillation. A cet effet, la colonne 1 est alimentable en résidus par l'intermédiaire d'une canne 8 ou de plusieurs cannes 8 d'injection fonctionnant en synchronisme ou de manière alternative. Ces cannes 8 sont positionnées en entrée de colonne 1. Chaque canne 8 est pourvue d'orifices 9 d'injection radiaux de dimension différente d'une canne à une autre. Il est ainsi possible, en fonction des caractéristiques des résidus, de faire fonctionner alternativement ou en synchronisme lesdites cannes. Il est également possible d'obturer tout ou partie des orifices de l'une quelconque des cannes.

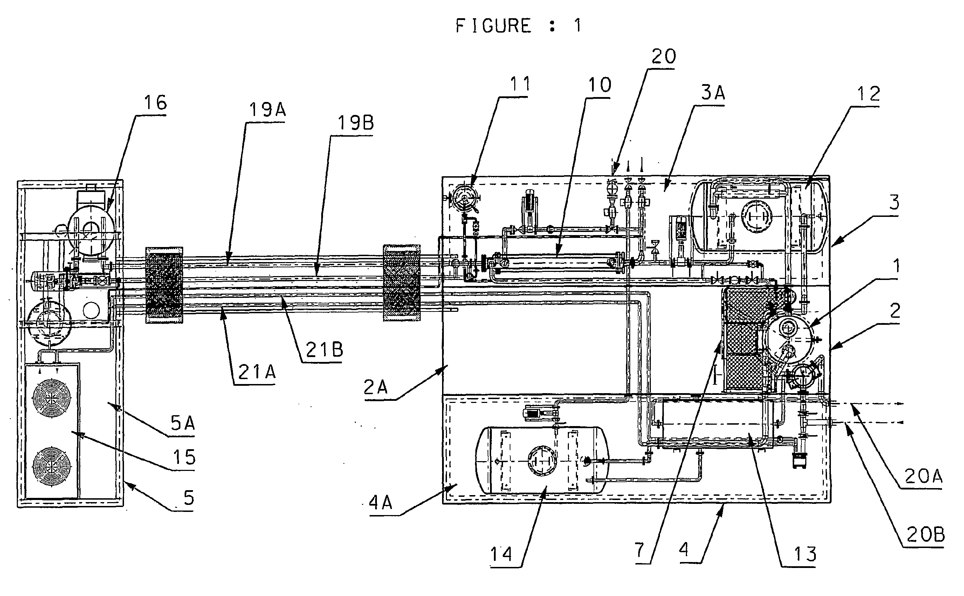

Dans les exemples représentés, l'échangeur de chaleur 10 et l'appareil 11 de production de vapeur d'eau sont portés par une plate-forme 3A indépendante de la plate-forme 2A support de la colonne 1 de distillation de manière à former un module 3 containérisable, dit de préparation du mélange. L'échangeur de chaleur 10 de ce module est alimenté en résidus par l'intermédiaire d'une canalisation dont une extrémité, représentée en 20 à la figure 1, est raccordable au bac de stockage des résidus à l'intérieur duquel s'opère une décantation naturelle desdits résidus. La colonne 1 de distillation comporte, outre une entrée équipée de cannes 8 d'injection, deux sorties, l'une dite inférieure destinée à récupérer la fraction lourde de la distillation, l'autre dite supérieure destinée à récupérer la fraction légère de la distillation. Ainsi, la sortie inférieure de la colonne 1 de distillation est raccordée à une cuve 12 de récupération de la fraction lourde de la distillation. Cette cuve 12 est portée par la même plate-forme 3A que celle portant l'échangeur 10 de chaleur et l'appareil 11 de production de vapeur. Cette fraction lourde de la distillation est constituée d'un fuel dit fuel numéro 2 à basse viscosité dont les caractéristiques sont sensiblement identiques quelle que soit la nature des eaux mazouteuses à retraiter. Un tel produit pourra ensuite être utilisé pour des cimenteries, des centrales électriques, des chaufferies industrielles ou autres.

La colonne 1 est, comme mentionné ci-dessus, pourvue d'une sortie supérieure reliée à un condenseur 6 lui-même reliable en sortie à une cuve 13 de séparation de l'eau du distillat, cette cuve 13 étant disposée en série avec une cuve 14 de récupération du distillat. En effet, les condensats, en sortie de condenseur, sont amenés au moyen d'une canalisation 17 dans une cuve 13 qui récupère les condensats et sépare l'eau du distillat. Le distillat est ensuite amené dans une cuve 14 de récupération du distillat. La séparation effectuée dans la cuve 13 s'effectue généralement par gravité. On note que les cuves 13 et 14 de séparation et de récupération du distillat sont portées par une même plate-forme 4A indépendante de la plate-forme 2A portant la colonne 1 de distillation de manière à former un module 4 containérisable dit module de traitement du distillat. La cuve 13 de séparation de l'eau du distillat comporte en outre des moyens d'amenée de l'eau séparée du distillat vers une réserve dite réserve à incendie non représentée. L'eau de cette réserve sert au refroidissement du condenseur 6. Dans l'exemple représenté à la figure 1, seul le départ de la conduite vers la réserve d'incendie et l'arrivée de la conduite issue de la réserve d'incendie sont représentés respectivement en 20A et 20B. Cette eau issue de la réserve à incendie peut être refroidie au contact d'un fluide réfrigéré produit à partir de moyens 15 de réfrigération portés par une plate-forme 5A, cette plate-forme comportant en outre les moyens 16 de chauffage du fluide servant au chauffage des résidus hydrocarburés. A cet effet, un certain nombre d'échangeurs de chaleur sont prévus au voisinage du condenseur 6 et des cuves 13, 14.

Pour permettre la production de ce fluide réfrigéré et de ce fluide chauffé, l'installation comporte, portés par une même plate-forme 5A indépendante de la plate-forme 2A portant la colonne 1 de distillation, des moyens 15 de réfrigération d'un fluide et des moyens 16 de chauffage d'un fluide. Le fluide réfrigéré ou le fluide chauffé sont aptes à circuler au voisinage d'éléments de fonction du reste de l'installation par l'intermédiaire de canalisations 19A, 19B pour le fluide thermique, et 21A, 21B pour le fluide réfrigérant, ces canalisations s'étendant entre le module 5 containérisable, dit module d'utilités et les autres modules 2, 3, 4 de l'installation. Cet ensemble de canalisations 19A, 19B, 21A, 21B peut également être équipé de passerelles pour faciliter la surveillance desdites canalisations. Ces canalisations peuvent constituer un groupe de canalisations pré-reliées les unes aux autres de manière à être simplement insérées entre le module 5 et les autres modules.

Comme l'illustrent les figures, généralement, le module de distillation 2 est disposé entre le module 3 de préparation des résidus et le module 4 de traitement du distillat. Le module 5, éloigné des autres modules, est quant à lui relié par l'ensemble des canalisations précitées plus particulièrement aux modules 2 et 3.

Il peut encore être prévu une armoire électrique (non représentée) positionnée en dehors d'un périmètre prédéterminé autour des modules 2, 3, 4 et 5, cette armoire électrique étant placée à l'intérieur d'un local technique et étant couplée à une unité de commande et de contrôle de type ordinateur pour permettre un pilotage de l'ensemble de l'installation à distance. Une telle installation permet de traiter annuellement de 8000 tonnes à plus de 20000 tonnes de résidus. Une telle installation, opérationnelle en quelques jours, occupe généralement une surface au sol de l'ordre de 100 m² et présente une faible consommation énergétique de l'ordre de 70 KVA. La mise en fonctionnement d'une telle installation peut s'effectuer en une heure de manière à permettre de gérer au mieux les variations d'approvisionnement en résidus hydrocarburés.

## Revendications

1. Installation transportable de retraitement de résidus hydrocarburés, en particulier de mélange eau/hydrocarbures, issus notamment de l'exploitation des navires et préalablement soumis à une décantation, en vue de la récupération de produits valorisables, tels que du fuel N°2 à basse viscosité et du naphta, dans laquelle l'installation comporte au moins une colonne (1) de distillation du mélange, cette colonne (1) comprenant une base (1B) et un fût (1A) articulé de manière permanente à la base (1B) de la colonne par une liaison (18) de type charnière, pour passer d'une position couchée de transport de la colonne (1) à une position dressée de travail,
**caractérisée en ce que** le fût (1A) et la base (1B) de la colonne sont équipés chacun d'une collerette, **en ce qu'**en position dressée de travail, le fût (1A) repose sur sa base (1B) et **en ce que** le fût (1A) est maintenu assemblé à la base (1B) de la colonne par boulonnage entre elles des deux collerettes équipant respectivement le fût (1A) et la base (1B).

2. Installation de retraitement selon la revendication 1,
**caractérisée en ce qu'**elle se présente sous forme d'un ensemble de modules (2, 3, 4, 5) containérisables, chaque module étant constitué d'une plate-forme (2A, 3A, 4A, 5A) apte à supporter les éléments de fonction dudit module (2, 3, 4,5).

3. Installation de retraitement selon l'une des revendications 1 et 2,
**caractérisée en ce que** la base (1B) de la colonne (1) est solidarisée à une plate-forme (2A) servant de surface de réception du fût (1A) de la colonne (1) en position couchée de cette dernière de manière à former un module (2), dit de retraitement du mélange, containérisable.

4. Installation de retraitement selon l'une des revendications 1 à 3,
**caractérisée en ce que** la colonne (1) est équipée, le long de l'une de ses génératrices, d'un condenseur (6) solidaire en déplacement du fût (1A) de la colonne (1).

5. Installation de retraitement selon l'une des revendications 1 à 4,
**caractérisée en ce que** la colonne (1) est équipée, le long de l'une de ses génératrices, de moyens (7) d'accès au sommet de la colonne, les dits moyens d'accès étant solidaires en déplacement du fût (1A) de la colonne (1).

6. Installation de retraitement selon l'une des revendications 1 à 5,
**caractérisée en ce que** la colonne (1) est alimentable en résidus par l'intermédiaire d'au moins deux cannes (8) d'injection fonctionnant en synchronisme ou de manière alternative, chaque canne (8) étant pourvue d'orifices (9) d'injection radiaux de dimension différente d'une canne à une autre.

7. Installation de retraitement selon l'une des revendications 1 à 6,
**caractérisée en ce que** l'entrée de la colonne (1) de distillation est raccordable d'une part à un échangeur (10) de chaleur apte à réchauffer les résidus destinés à alimenter ladite colonne (1), d'autre part à un appareil (11) de production de vapeur d'eau apte à faciliter la distillation.

8. Installation de retraitement selon la revendication 7,
**caractérisée en ce que** l'échangeur (10) de chaleur et l'appareil (11) de production de vapeur d'eau sont portés par une plate-forme (3A) indépendante d'une plate-forme (2A) support de la colonne (1) de distillation de manière à former un module (3) containérisable, dit de préparation du mélange.

9. Installation de retraitement selon la revendication 8,
**caractérisée en ce que** la sortie inférieure de la colonne (1) de distillation est raccordée à une cuve (12) de récupération de la fraction lourde de la distillation, cette cuve (12) étant portée par la même plate-forme (3A) que celle portant l'échangeur (10) de chaleur et l'appareil (11) de production de vapeur.

10. Installation de retraitement selon l'une des revendications 1 à 9,
**caractérisée en ce que** la colonne (1) est pourvue d'une sortie supérieure reliée à un condenseur (6) lui-même reliable en sortie à une cuve (13) de séparation de l'eau du distillat, cette cuve (13) étant disposée en série avec une cuve (14) de récupération du distillat.

11. Installation de retraitement selon la revendication 10,
**caractérisée en ce que** les cuves (13, 14) de séparation et de récupération du distillat sont portées par une même plate-forme (4A) indépendante d'une plate-forme (2A) portant la colonne (1) de distillation de manière à former un module (4) containérisable dit module de traitement du distillant.

12. Installation de retraitement selon l'une des revendications 10 et 11,
**caractérisée en ce que** la cuve (13) de séparation de l'eau du distillat comporte des moyens d'amenée de l'eau séparée du distillat vers une réserve dite réserve à incendie, l'eau de cette réserve servant au refroidissement du condenseur (6).

13. Installation de retraitement selon l'une des revendications 3 à 12,
**caractérisée en ce que** l'installation comporte, portés par une même plate-forme (5A) indépendante d'une plate-forme (2A) portant la colonne (1) de distillation, des moyens (15) de réfrigération d'un fluide et des moyens (16) de chauffage d'un fluide, le fluide réfrigéré ou chauffé étant apte à circuler au voisinage d'éléments de fonction du reste de l'installation par l'intermédiaire de canalisations (19A, 19B, 21A, 21B) s'étendant entre le module (5) containérisable, dit module d'utilités constitués des moyens de chauffage (16) et de réfrigération (15), et au moins une partie des autres modules (2, 3, 4) de l'installation.

## Claims

1. A mobile rig for reprocessing hydrocarbon wastes, in particular water-hydrocarbons mixture resulting especially from shipping and pre-decanted in such a way that valuable products like low-viscosity fuel oil No. 2 or naphtha are extractable, wherein the rig comprises at least one mixture distilling tower (1), said tower (1) including a base (1B) and a barrel (1A) permanently articulated on the base (1B) of the tower by means of a hinge type connection (18) in such a way that the tower (1) is switchable from a laid down transportation position to an upstanding working position, **characterised in that** the barrel (1A) and the base (1B) of the tower are each fitted with a flange ring, **in that** in the upstanding working position the barrel (1A) rests on the base (1B), and **in that** the barrel (1A) is held assembled to the base (1B) of the tower by bolting together the two flange rings fitted respectively to the barrel (1A) and the base (1B).

2. Reprocessing rig according to claim 1, **characterised in that** it has the form of a set of containerisable modules (2, 3, 4, 5) each module comprising a platform (2A, 3A, 4A, 5A) capable of supporting the functional components of said module (2, 3, 4, 5).

3. Reprocessing rig according to any one of claims 1 and 2, **characterised in that** the base (1B) of the tower (1) is integral with a platform (2A) serving as a receiving surface for the barrel (1A) of the tower (1) when the latter is in the laid down position so as to form a containerisable module (2) referred to as the mixture reprocessing module.

4. Reprocessing rig according to any one of claims 1 to 3, **characterised in that** the tower (1) is equipped, along one of its generatrices, with a condenser (6) integral in movement with the barrel (1A) of the tower (1).

5. Reprocessing rig according to any one of claims 1 to 4, **characterised in that** the tower (1) is equipped, along one of its generatrices, with means of access (7) to the top of the tower, said means of access being integral in movement with the barrel (1A) of the tower (1).

6. Reprocessing rig according to any one of claims 1 to 5, **characterised in that** the tower (1) is capable of receiving a waste feed via at least two injection pipes (8) operating synchronously or in alternate fashion, each pipe (8) being provided with radial injection apertures (9) differing in size from one pipe to another.

7. Reprocessing rig according to any one of claims 1 to 6, **characterised in that** the inlet of the distillation tower (1) is connectable on one hand to a heat exchanger (10) capable of heating the waste feed to said tower (1), and on the other hand to a steam generating apparatus (11) designed to facilitate the distillation process.

8. Reprocessing rig according to claim 7, **characterised in that** the heat exchanger (10) and the steam generating apparatus (11) are carried by a platform (3A) independent of a platform (2A) supporting the distillation tower (1) so as to form a containerisable module (3) referred to as the mixture preparation module.

9. Reprocessing rig according to claim 8, **characterised in that** the bottom outlet of the distillation tower (1) is connected to a tank (12) designed to collect the heavy fraction from the distillation process, this tank (12) being carried by the same platform (3A) as that carrying the heat exchanger (10) and the steam generating apparatus (11).

10. Reprocessing rig according to any one of claims 1 to 9, **characterised in that** the tower (1) is provided with a top outlet connected to a condenser (6) which is in turn connectable at its outlet to a water/distillate separation tank (13), this tank (13) being arranged in series with a distillate collection tank (14).

11. Reprocessing rig according to claim 10, **characterised in that** the distillate separation and collection tanks (13, 14) are carried by the same platform (4A) independent of a platform (2A) carrying the distillation tower (1) so as to form a containerisable module (4) referred to as the distillate treatment module.

12. Reprocessing rig according to any one of claims 10 and 11, **characterised in that** the water/distillate separation tank (13) includes means to transfer the water separated from the distillate to a holding tank referred to as the fire water stock, the water in this holding tank being utilised to cool the condenser (6).

13. Reprocessing rig according to any one of claims 3 to 12, **characterised in that** the rig includes, and carried by the same platform (5A) independent of a platform (2A) supporting the distillation tower (1), means (15) of cooling a fluid and means (16) of heating a fluid, the cooled or heated fluid being designed to circulate in proximity to the functional components of the rest of the rig via pipework (19A, 19B, 21A, 21B) extending between the containerisable module (5), referred to as the utilities module comprising means of heating (16) and cooling (15), and at least one part of the other modules (2, 3, 4) of the rig.

## Patentansprüche

1. Transportable Vorrichtung zur Wiederaufarbeitung von Kohlenwasserstoffrückständen, insbesondere von Wasser/Kohlenwasserstoff-Gemischen, insbesondere aus dem Betrieb von Schiffen, die einer vorherigen Dekantierung unterzogen wurden, um verwertbare Produkte wie niedrigviskosen Kraftstoff Nr. 2 und Rohbenzin rückzugewinnen, die mindestens eine Säule (1) für die Destillation des Gemisches mit einem Fuß (1B) und einem Schaft (1A) umfasst, der über eine scharnierartige Verbindung (18) dauerhaft mit dem Fuß (1B) der Säule gelenkig verbunden ist, um von einer liegenden Transportposition der Säule (1) in eine aufrechte Arbeitsposition verstellt zu werden, **dadurch gekennzeichnet, dass** der Schaft (1A) und der Fuß (1B) der Säule jeweils mit einem Bund versehen sind, dass der Schaft (1A) in der aufrechten Arbeitsposition auf dem Fuß (1B) aufliegt und dass der Schaft (1A) durch Verschraubung der beiden Bünde, mit denen der Schaft (1A) und der Fuß (1B) versehen sind, mit dem Fuß (1B) der Säule verbunden wird.

2. Wiederaufarbeitungsvorrichtung nach Anspruch 1, **dadurch gekennzeichnet, dass** sie als Einheit aus containerfähigen Modulen (2, 3, 4, 5) vorliegt, wobei jedes Modul eine Plattform (2A, 3A, 4A, 5A) umfasst, die die Funktionselemente des Moduls (2, 3, 4, 5) zu tragen geeignet ist.

3. Wiederaufarbeitungsvorrichtung nach einem der Ansprüche 1 und 2, **dadurch gekennzeichnet, dass** der Fuß (1B) der Säule (1) mit einer Plattform (2A) verbunden ist, die als Aufnahmefläche für den Schaft (1A) der Säule (1) in liegender Position der Säule dient, so dass ein containerfähiges Modul (2), ein so genanntes Gemischwiederaufarbeitungsmodul, gebildet wird.

4. Wiederaufarbeitungsvorrichtung nach einem der Ansprüche 1 bis 3, **dadurch gekennzeichnet, dass** die Säule (1) entlang einer ihrer Mantellinien mit einem Kondensator (6) ausgerüstet ist, der mit dem Schaft (1A) der Säule (1) starr verbunden ist.

5. Wiederaufarbeitungsvorrichtung nach einem der Ansprüche 1 bis 4, **dadurch gekennzeichnet, dass** die Säule (1) entlang einer ihrer Mantellinien mit Mitteln (7) für den Zugang zum oberen Ende der Säule ausgerüstet ist, wobei die Zugangsmittel mit dem Schaft (1A) der Säule (1) starr verbunden sind.

6. Wiederaufarbeitungsvorrichtung nach einem der Ansprüche 1 bis 5, **dadurch gekennzeichnet, dass** die Säule (1) über mindestens zwei Einspritzrohre (8), die synchron oder abwechselnd arbeiten, mit Rückständen versorgbar ist, wobei jedes Rohr (8) mit radial verlaufenden Einspritzöffnungen (9) versehen ist, deren Größte sich zwischen den Rohren unterscheidet.

7. Wiederaufarbeitungsvorrichtung nach einem der Ansprüche 1 bis 6, **dadurch gekennzeichnet, dass** der Eingang der Destillationssäule (1) einerseits an einen Wärmetauscher (10), der die zur Versorgung der Säule (1) vorgesehenen Rückstände zu erwärmen geeignet ist, und andererseits mit einem Gerät (11) zur Wasserdampferzeugung, das die Destillation zu erleichtern geeignet ist, anschließbar ist.

8. Wiederaufarbeitungsvorrichtung nach Anspruch 7, **dadurch gekennzeichnet, dass** der Wärmetauscher (10) und das Gerät (11) zur Wasserdampferzeugung von einer Plattform (3A) getragen werden, die unabhängig von einer die Destillationssäule (1) tragenden Plattform (2A) ist, so dass ein containerfähiges Modul (3), ein so genanntes Gemischvorbereitungsmodul, gebildet wird.

9. Wiederaufarbeitungsvorrichtung nach Anspruch 8, **dadurch gekennzeichnet, dass** der untere Ausgang der Destillationssäule (1) an einen Tank (12) zur Rückgewinnung der schweren Destillationsfraktion angeschlossen ist, wobei der Tank (12) von derselben Plattform (3A) getragen wird, die den Wärmetauscher und das Gerät (11) zur Wasserdampferzeugung trägt.

10. Wiederaufarbeitungsvorrichtung nach einem der Ansprüche 1 bis 9, **dadurch gekennzeichnet, dass** die Säule (1) mit einem oberen Ausgang versehen ist, der mit einem Kondensator (6) verbunden ist, der am Ausgang mit einem Tank (13) zur Trennung des Wassers von dem Destillat verbindbar ist, wobei der Tank (13) in Reihe mit einem Tank (14) zur Destillatrückgewinnung angeordnet ist.

11. Wiederaufarbeitungsvorrichtung nach Anspruch 10, **dadurch gekennzeichnet, dass** die Tanks (13, 14) zur Trennung und Rückgewinnung des Destillates von einer Plattform (4A) getragen werden, die unabhängig von einer die Destillationssäule (1) tragenden Plattform (2A) ist, so dass ein containerfähiges Modul (4), ein so genanntes Destillataufarbeitungsmodul, gebildet wird.

12. Wiederaufarbeitungsvorrichtung nach einem der Ansprüche 10 und 11, **dadurch gekennzeichnet, dass** der Tank (13) zur Trennung des Wassers von dem Destillat Mittel für die Zufuhr des von dem Destillat getrennten Wassers zu einem Feuerlöschbehälter genannten Behälter umfasst, wobei das Wasser aus diesem Behälter zur Kühlung des Kondensators (6) dient.

13. Wiederaufarbeitungsvorrichtung nach einem der Ansprüche 3 bis 12, **dadurch gekennzeichnet, dass** die Vorrichtung von einer von einer die Destillationssäule (1) tragenden Plattform (2A) unabhängigen Plattform (5A) getragene Mittel (15) zur Kühlung einer Flüssigkeit und Mittel (16) zur Erwärmung einer Flüssigkeit umfasst, wobei die gekühlte oder erwärmte Flüssigkeit in der Nähe von Funktionselementen der übrigen Vorrichtung durch Leitungen (19A, 19B, 21A, 21B) zu fließen geeignet ist, die sich zwischen dem containerfähigen Modul (5), dem so genannten Hilfsstoffmodul, das aus Erwärmungsmitteln (16) und Kühlungsmitteln (15) besteht, und mindestens einem Teil der anderen Module (2, 3, 4) der Vorrichtung erstrecken.
